# EUROPÄISCHE PATENTSCHRIFT

(11) **EP 4 090 541 B1**
(45) Veröffentlichungstag und Bekanntmachung des Hinweises auf die Patenterteilung: **08.05.2024**
(21) Anmeldenummer: 21701667.4
(22) Anmeldetag: 08.01.2021
(51) Int. Cl.: B60B 3/02, B60B 3/06, B60B 3/10, B22D 15/00, B22D 17/14

(54) **KRAFTWAGENFELGE AUS ALUMINIUM ODER EINER ALUMINIUMLEGIERUNG FÜR EIN RAD EINES KRAFTFAHRZEUGS**
WHEEL RIM FOR A VEHICLE WHEEL, MADE OF ALUMINIUM OR AN ALUMINIUM ALLOY
JANTE POUR ROUE DE VÉHICULE, EN ALUMINIUM OU EN ALLIAGE D'ALUMINIUM

(30) Priorität: 14.01.2020 DE 102020100701
(43) Veröffentlichungstag der Anmeldung: 23.11.2022
(73) Patentinhaber: Audi AG, 85045 Ingolstadt (DE); Superior Industries Automotive Germany GmbH, 58513 Lüdenscheid (DE)
(72) Erfinder: REILING, Jaan Mattes, 48336 Sassenberg (DE); GAUGLER, Jan, 74855 Neckarmühlbach (DE); HUMMEL, Marc, 74363 Güglingen (DE); KUBE, Detlef, 59846 Sundern (DE); TIMM, Michael, 58840 Plettenberg (DE)
(86) Internationale Anmeldenummer: PCT/EP2021/050219
(87) Internationale Veröffentlichungsnummer: WO 2021/144197

(56) Entgegenhaltungen:
- EP-A1- 1 034 863
- DE-A1-102005 026 829

## Beschreibung

Die Erfindung betrifft eine Kraftwagenfelge aus Aluminium oder einer Aluminiumlegierung für ein Rad eines Kraftfahrzeugs, wobei die Kraftwagenfelge ein auf gegenüberliegenden Seiten von einem Außenhorn und einem Innenhorn begrenztes Felgenbett, eine Nabe mit einer Mittenausnehmung und einem Lochkreis sowie eine das Felgenbett und die Nabe miteinander verbindende, im Längsschnitt außermittig an dem Felgenbett angreifende Felgenmitte aufweist, wobei die Kraftwagenfelge einstückig und durchgehend in einer Gießform durch Vakuumdruckgießen hergestellt ist.

Aus dem Stand der Technik ist die Druckschrift DE 10 2005 026 829 A1 bekannt. Diese beschreibt ein Verfahren zum Herstellen einer ein Felgenbett sowie einen Felgenstern aufweisenden Fahrzeugfelge, wobei zumindest der Felgenstern mittels eines Vakuum-Druckgießprozesses von flüssigem Aluminium oder einer flüssigen Aluminiumlegierung in eine der Form des Felgensterns ausbildenden Gussform hergestellt wird.

Aus dem Stand der Technik ist weiterhin die Druckschrift EP 0 301 472 B1 bekannt. Diese beschreibt ein Herstellverfahren für Leichtmetallguss-Räder für Personenkraftwagen, wobei eine nah-eutektische veredelte AlSi-Legierung verwendet wird, die - neben Al - Gewichtsanteile von 9,5 % bis 12,5 % Silizium und Legierungsbestandteile wie maximal 0,2 % Eisen, maximal 0,05 % Mangan, maximal 0,1 % Titan, maximal 0,03 % Kupfer, maximal 0,05 % Zink sowie je höchstens 0,05 % und in der Summe höchstens 0,15 % sonstige Verunreinigungen enthält, und wobei die Räder nach dem Erstarren aus der Gießform entnommen und abgekühlt werden. Dabei ist vorgesehen, dass die Legierung mindestens 0,05 bis höchstens 0,15 % Gewichtsanteile Magnesium enthält und dass die Räder von einer Temperatur - gemessen an deren Oberfläche - von mindestens 380 °C an Innenbereichen beziehungsweise Bereichen mit Massenkonzentrationen, wie Nabe und Schüssel von Rädern, unmittelbar beim Entnehmen aus der Gussform in Wasser abgeschreckt werden.

Weiterhin zeigt die Druckschrift DE 696 01 183 T2 eine Aluminium-Druckgusslegierung für eine Radscheibe, umfassend Si: 0,6 bis 1,0 Gew.-%, Mg: 0,8 bis 1,2 Gew.-%, Cu: 0,1 bis 0,5 Gew.-%, Zn: 0,4 bis 1,2 Gew.-%, Mn: 0,4 bis 1,2 Gew.-%, Ti: 0,01 bis 0,20 Gew.-%, B: 0,002 bis 0,04 Gew.-% und als Rest Al sowie unvermeidbare Verunreinigungen.

Es ist Aufgabe der Erfindung, ein eine Kraftwagenfelge aus Aluminium oder einer Aluminiumlegierung für ein Rad eines Kraftfahrzeugs vorzuschlagen, welche eine besonders rasche und kostengünstige Herstellung mit besonders filigranen Strukturen ermöglicht.

Dies wird durch eine Kraftwagenfelge mit den Merkmalen des Anspruchs 1 erreicht. Dabei ist vorgesehen, dass die Kraftwagenfelge wenigstens bereichsweise eine geringe Wandstärke von höchstens 15 mm aufweist, und/oder eine Krümmung mit einem geringen Krümmungsradius von höchstens 4 mm aufweist, und/oder eine in axialer Richtung und in radialer Richtung und/oder in axialer Richtung und in tangentialer Richtung bezüglich einer Längsmittelachse der Kraftwagenfelge verlaufende Entformungsfläche aufweist, die vollständig in einer gedachten Ebene liegt, wobei die Ebene mit der Längsmittelachse einen Winkel einschließt, der mehr als 0° und höchstens 4° beträgt.

Die Kraftwagenfelge ist üblicherweise Bestandteil des Rads des Kraftfahrzeugs, wobei an dem Kraftfahrzeug mehrere Räder angeordnet sind, welche jeweils eine solche Kraftwagenfelge aufweisen. Das Kraftfahrzeug liegt in Form eines Kraftwagens vor und verfügt insoweit über mehr als zwei Räder, insbesondere über genau vier Räder. Die Kraftwagenfelge ist explizit für den Einsatz bei einem solchen als Kraftwagen ausgebildeten Kraftfahrzeug vorgesehen und ausgebildet. Die Kraftwagenfelge liegt also nicht als generische Kraftfahrzeugfelge vor, sondern ist für den Einsatz an dem Kraftwagen bestimmt und entsprechend ausgebildet.

Die Kraftwagenfelge weist als wesentliche Bestandteile das Felgenbett, die Felgenmitte und die Nabe auf. Das Felgenbett und die Nabe sind über die Felgenmitte miteinander verbunden, wobei zumindest das Felgenbett, die Felgenmitte und die Nabe einstückig und materialeinheitlich miteinander ausgebildet sind. Das Felgenbett, die Felgenmitte und die Nabe werden hierzu gleichzeitig miteinander ausgebildet, nämlich während eines einzigen Herstellungsschritts. Es ist also nicht vorgesehen, das Felgenbett, die Felgenmitte und die Nabe separat voneinander herzustellen und nachträglich aneinander zu befestigen. Vielmehr erfolgt die Herstellung gemeinsam, nämlich durch das Vakuumdruckgießen des Gießmaterials in der Gießform.

Die Kraftwagenfelge weist eine Längsmittelachse auf, welche insbesondere einer Längsmittelachse der Nabe entspricht und bevorzugt mit einer späteren Drehachse des Rads zusammenfällt oder zumindest nahezu zusammenfällt. In axialer Richtung bezüglich dieser Längsmittelachse gesehen ist das Felgenbett auf gegenüberliegenden Seiten von dem Außenhorn und dem Innenhorn begrenzt. Das Außenhorn und das Innenhorn liegen insoweit auf gegenüberliegenden Seiten des Felgenbetts vor und schließen einen Reifenaufnahmebereich der Kraftwagenfelge im Längsschnitt bezüglich der Längsmittelachse gesehen zwischen sich ein. Der Reifenaufnahmebereich dient der Aufnahme eines Reifens, der zusammen mit der Kraftwagenfelge das Rad ausbildet. Reifenaufnahmebereich wird in radialer Richtung nach innen von dem Felgenbett und in axialer Richtung auf gegenüberliegenden Seiten von dem Außenhorn und dem Innenhorn begrenzt.

Besonders bevorzugt ist die gesamte Kraftwagenfelge in axialer Richtung beziehungsweise im Längsschnitt gesehen in einer ersten Richtung von dem Au-ßenhorn und in einer zweiten Richtung von dem Innenhorn begrenzt, sodass das Außenhorn und das Innenhorn eine Gesamterstreckung der Kraftwagenfelge in axialer Richtung, entsprechend einer Breite der Kraftwagenfelge, definieren. Bei einer Montage des Rads an dem Kraftfahrzeug wird das Rad über ein Radlager an einem Radträger drehbar gelagert. Das Außenhorn liegt nach der Montage des Rads an dem Kraftfahrzeug auf einer von dem Radträger abgewandten Seite der Kraftwagenfelge und das Innenhorn auf einer dem Radträger zugewandten Seite der Kraftwagenfelge vor.

Das Außenhorn und das Innenhorn liegen in Form eines von dem Felgenbett ausgehenden Radialvorsprungs vor, der sich von dem Felgenbett in radialer Richtung nach außen erstreckt, wiederum bezogen auf die Längsmittelachse der Kraftwagenfelge. Selbstverständlich sind auch das Außenhorn und das Innenhorn einstückig und materialeinheitlich mit dem Rest der Kraftwagenfelge, insbesondere dem Felgenbett, der Fehlgenmitte und der Nabe ausgebildet. Sie werden insoweit gleichzeitig mit diesen mittels des Vakuumdruckgießens ausgebildet.

Die Nabe verfügt über die Mittenausnehmung und den Lochkreis. Die Mittenausnehmung ist eine zentrale Ausnehmung zur Aufnahme einer Radnabe des Kraftfahrzeugs, an welcher das Rad bei der Montage an dem Kraftfahrzeug befestigt wird. Die Radnabe ist über das Radlager an dem Radträger drehbar gelagert. Der Lochkreis besteht aus mehreren entlang eines gedachten Kreises angeordneten Bohrungen, die jeweils zur Aufnahme eines Befestigungsmittels dienen, mithilfe dessen die Kraftwagenfelge an der Radnabe befestigt wird. Das Befestigungsmittel liegt beispielsweise in Form einer Schraube, eines Bolzens oder dergleichen vor.

Das Felgenbett und die Nabe sind über die Felgenmitte miteinander verbunden. Die Felgenmitte liegt also in radialer Richtung bezüglich der Längsmittelachse gesehen zwischen dem Felgenbett und der Nabe vor. Sie erstreckt sich in radialer Richtung gesehen von der Nabe bis hin zu dem Felgenbett. Beispielsweise weist die Felgenmitte mehrere Speichen auf, welche in Umfangsrichtung voneinander beabstandet angeordnet beziehungsweise ausgebildet sind. Die Felgenmitte kann jedoch auch in Umfangsrichtung durchgehend ausgestaltet sein, insbesondere vollständig.

Die Felgenmitte greift in axialer Richtung beziehungsweise im Längsschnitt gesehen außermittig an dem Felgenbett an. Das bedeutet, dass sie abseits eines Mittelpunkts des Felgenbetts in axialer Richtung in dieses übergeht. Bevorzugt greift die Felgenmitte mit einem Abstand von dem Mittelpunkt des Felgenbetts in axialer Richtung an, der bezogen auf eine Gesamterstreckung des Felgenbetts in axialer Richtung mindestens 10 %, mindestens 20 %, mindestens 30 %, mindestens 40 % oder mehr beträgt. Beispielsweise geht die Felgenmitte in axialer Richtung gesehen endseitig des Felgenbetts in dieses über. In diesem Fall mündet die Felgenmitte im Längsschnitt gesehen in Überdeckung mit dem Außenhorn oder dem Innenhorn, bevorzugt ersterem, in das Felgenbett ein. Aufgrund der außermittig an dem Felgenbett angreifenden Felgenmitte wirkt auf die Felgenmitte nach der Montage des Rads an dem Kraftfahrzeug nicht nur eine Kraft in radialer Richtung, sondern zusätzlich ein Biegemoment in axialer Richtung beziehungsweise in einer die Längsmittelachse der Kraftwagenfelge aufnehmenden gedachten Ebene. Hierdurch war es bislang notwendig, die Felgenmitte unter hohem Materialeinsatz entsprechend massiv auszubilden.

Im Längsschnitt gesehen weist das Felgenbett in axialer Richtung bevorzugt eine größere Erstreckung auf als die Felgenmitte und die Nabe. Insbesondere ist die axiale Erstreckung des Felgenbetts größer als die axiale Erstreckung der Nabe, welche wiederum größer ist als die axiale Erstreckung der Felgenmitte. Beispielsweise beträgt die axiale Erstreckung der Nabe bezogen auf die axiale Erstreckung des Felgenbetts höchstens 50 %, höchstens 40 %, höchstens 30 %, höchstens 25 % oder höchstens 20 %. Die axiale Erstreckung der Felgenmitte beträgt bezogen auf die axiale Erstreckung des Felgenbetts beispielsweise höchstens 25 %, höchstens 20 %, höchstens 15 %, höchstens 10 % oder höchstens 5 %. Aufgrund der außermittig an den Felgen angreifenden Felgenmitte wird durch die genannten Abmessungen eine von dem Felgenbett umgriffene Aufnahme für die Radnabe und/oder eine an dem Rad befestigte Bremsscheibe geschaffen, wobei die Radnabe und/oder die Bremsscheibe nach der Montage des Rads an dem Kraftfahrzeug in dieser Aufnahme vorliegen.

Die Kraftwagenfelge besteht durchgehend und materialeinheitlich aus dem Gießmaterial, nämlich dem Aluminium oder - bevorzugt - aus der Aluminiumlegierung. Dieses wird durch bei einem passenden Herstellungsverfahren mittels Vakuumdruckgießen verarbeitet. Bei dem Vakuumdruckgießen kommt die Gießform zum Einsatz, mittels welcher die Kraftwagenfelge und damit zumindest das Felgenbett mitsamt dem Außenhorn und dem Innenhorn die Felgenmitte und die Nabe ausgebildet werden. Auch die Mittenausnehmung, welche im Übrigen auch als Radnabenaufnahme bezeichnet werden kann, ist vorzugsweise zumindest teilweise mittels des Vakuumdruckgießens ausgebildet.

Das Vakuumdruckgießen zeichnet sich dadurch aus, dass die Gießform vor und/oder bei dem Einbringen des Gießmaterials in die Gießform zumindest teilweise evakuiert wird. Das bedeutet, dass die Gießform vor und/oder bei dem Einbringen des Gießmaterials mit einem Unterdruck beaufschlagt wird. Unter dem Unterdruck ist hierbei ein Druck zu verstehen, welcher gegenüber einem Einbringungsdruck, bei welchem das Gießmaterial in die Gießform eingebracht wird und/oder einem Umgebungsdruck in einer Außenumgebung der Gießform geringer ist. Beispielsweise beträgt der Unterdruck bezogen auf den Außendruck höchstens 50 %, höchstens 25 %, höchstens 10 % oder höchstens 5 %. Beispielsweise beträgt der Restdruck zwischen 50 mbar und 200 mbar. Unter dem Restdruck ist der absolute Druck in der Gießform zu verstehen.

Das Evakuieren der Gießform erfolgt beispielsweise mittels einer Unterdruckquelle, welche hierzu mit der Gießform in Strömungsverbindung gesetzt wird. Insbesondere wird die Gießform bereits vor dem Einbringen des Gießmaterials evakuiert. Beispielsweise erfolgt das Einbringen des Gießmaterials bei, insbesondere erst bei, Erreichen eines bestimmten Unterdrucks beziehungsweise Restdrucks in der Gießform. Es kann zusätzlich oder alternativ vorgesehen sein, die Gießform während des Einbringens des Gießmaterials zu evakuieren, also die Strömungsverbindung zwischen der Unterdruckquelle und der Gießform während des Einbringens des Gießmaterials in die Gießform aufrechtzuerhalten und die Unterdruckquelle zum Evakuieren der Gießform weiter zu betreiben. Hierdurch können besonders filigrane Strukturen der Kraftwagenfelge hergestellt werden.

Beispielsweise ist es vorgesehen, die Gießform zunächst mittels wenigstens einer Dichtung abzudichten, beispielsweise mittels einer Dichtschnur, insbesondere einer Silikondichtschnur. Anschließend wird das Gießmaterial in eine Gießkammer dosiert, die mit der Gießform strömungstechnisch verbunden ist. Hierzu ist die Gießkammer zumindest zeitweise mit einem Tiegel strömungstechnisch verbunden ist, in welchem das geschmolzene Gießmaterial bevorratet ist. Dann wird die Gießform mit dem Unterdruck beaufschlagt und das in der Gießkammer befindliche Gießmaterial in die Gießform hineingedrängt, insbesondere mittels eines druckbeaufschlagten Kolbens. Vorzugsweise besteht gleichzeitig die Strömungsverbindung zwischen der Gießkammer und dem Tiegel, insbesondere weiterhin. Das bedeutet, dass das Evakuieren der Gießkammer auch während des Einbringens des Gießmaterials erfolgt.

Die mittels des Vakuumdruckgießens hergestellte Kraftwagenfelge zeichnet sich durch eine besonders geringe Wandstärke und/oder eine Krümmung mit einem besonders geringen Krümmungsradius und/oder durch das Vorliegen der Entformungsfläche aus. Unter der Wandstärke ist die Dicke der Wand der Kraftwagenfelge an wenigstens einer Stelle zu verstehen. Die geringe Wandstärke kann also zum Beispiel an dem Felgenbett, dem Außenhorn, dem Innenhorn, der Felgenmitte und/oder der Nabe vorliegen. Besonders bevorzugt liegt die geringe Wandstärke an der Felgenmitte vor. Ganz besonders bevorzugt stellt die geringe Wandstärke die größte Wandstärke dar, beispielsweise die größte Wandstärke des Außenhorns, die größte Wandstärke des Innenhorns und/oder die größte Wandstärke der Felgenmitte. Selbstverständlich kann sie auch die größte Wandstärke des Felgenbetts und/oder der Nabe sein.

Die geringe Wandstärke beträgt höchstens 15 mm, höchstens 10 mm, höchstens 7,5 mm oder höchstens 5 mm, ist bevorzugt jedoch kleiner. Somit beträgt sie beispielsweise höchstens 4 mm, höchstens 3 mm, höchstens 2 mm oder höchstens 1,5 mm. Umgekehrt beträgt die geringe Wandstärke besonders bevorzugt mindestens 1,5 mm oder mindestens 2 mm. In anderen Worten beträgt die geringe Wandstärke zum Beispiel mindestens 1,5 mm und höchstens 5 mm, mindestens 1,5 mm und höchstens 4 mm, mindestens 1,5 mm und höchstens 3 mm, mindestens 1,5 mm und höchstens 2 mm oder in etwa oder genau 1,5 mm. Sie kann jedoch auch mindestens 2 mm und höchstens 5 mm, mindestens 2 mm und höchstens 4 mm, mindestens 2 mm und höchstens 3 mm oder genau 2 mm betragen.

Zusätzlich oder alternativ zu der geringen Wandstärke liegt die Krümmung mit dem geringen Krümmungsradius vor. Die Krümmung ist eine Krümmung einer Außenfläche beziehungsweise einer Außenumfangsfläche der Kraftwagenfelge. Die Außenfläche begrenzt eine Wandung der Kraftfahrzeugfelge nach außen. Die Krümmung kann an einer beliebigen Stelle der Kraftwagenfelge vorliegen, beispielsweise an dem Felgenbett, dem Außenhorn, dem Innenhorn, der Felgenmitte und/oder der Nabe. Die Krümmung ist insbesondere eine Übergangskrümmung zwischen zwei Flächen, welche - im Schnitt gesehen - gegeneinander angewinkelt sind und beispielsweise als plane Flächen vorliegen.

Die Krümmung erstreckt sich vorzugsweise über einen Winkel von mindestens 30°, mindestens 45°, mindestens 60° oder mindestens 90°. Die Krümmung weist den geringen Krümmungsradius auf, welcher höchstens 4 mm beträgt, bevorzugt jedoch kleiner ist. Beispielsweise entspricht der geringe Krümmungsradius insoweit also beispielsweise einem Krümmungsradius von höchstens 3 mm, höchstens 2 mm, höchstens 1,5 mm oder höchstens 1 mm. Bevorzugt sind Krümmungsradien von höchstens 2 mm oder weniger. Umgekehrt kann der Krümmungsradius zusätzlich mindestens 0,25 mm, mindestens 0,5 mm oder mindestens 0,75 mm betragen.

Zusätzlich oder alternativ zu der geringen Wandstärke und/oder der Krümmung mit dem geringen Krümmungsradius kann die Kraftwagenfelge die Entformungsfläche aufweisen. Unter der Entformungsfläche ist eine ebene Fläche zu verstehen, die bei dem Vakuumdruckgießen unmittelbar an der Gießform anliegt und entlang welcher nach dem Vakuumdruckgießen das Entformen der Kraftwagenfelge aus der Gießform erfolgt. Die Entformungsfläche weist eine Erstreckung zumindest in axialer Richtung und in radialer Richtung und/oder - zusätzlich oder alternativ - in axialer Richtung und in tangentialer Richtung, jeweils bezüglich der Längsmittelachse der Kraftwagenfelge auf. In jedem Fall weist die Entformungsfläche also eine Erstreckung in zwei senkrecht aufeinander stehenden Richtungen auf und liegt insoweit vollständig in der gedachten Ebene.

Das Entformen der Kraftwagenfelge erfolgt in derselben Richtung. Beispielsweise wird ein Teil der Gießform nach dem Vakuumdruckgießen in Richtung der Längsmittelachse, also in axialer Richtung, zum Öffnen der Gießform und zum Entnehmen der Kraftwagenfelge aus der Gießform verlagert. Das bedeutet, dass eine während des Vakuumdruckgießens an der Entformungsfläche anliegende und diese ausbildende Gießformfläche der Gießform nach dem Vakuumdruckgießen entlang der Längsmittelachse verlagert wird. Bei einem herkömmlichen Verfahren zum Herstellen einer Kraftwagenfelge muss ein Entformungswinkel, also ein zwischen der Entformungsfläche und der Längsmittelachse vorliegender Winkel, mindestens 5° betragen, um ein ordnungsgemäßes Entformen sicherzustellen.

Aufgrund des einstückigen und durchgehenden Ausbildens der Kraftwagenfelge durch Vakuumdruckgießen aus Aluminium beziehungsweise der Aluminiumlegierung ist jedoch ein deutlich geringerer Winkel realisierbar. Der Winkel zwischen der Entformungsfläche beziehungsweise zwischen der die Entformungsfläche vollständig aufnehmenden Ebene und der Längsmittelachse beträgt insoweit zwischen infinitesimal mehr als 0° und 4°, diese Werte jeweils einschließend. Es kann also vorgesehen sein, dass die Entformungsfläche nahezu parallel zu der Längsmittelachse verläuft, sodass bei dem Entformen ein nahezu paralleles Verlagern der Gießformfläche und der Entformungsfläche auftritt. Unter dem Winkel von 0° ist zu verstehen, dass die Ebene und die Längsmittelachse ineinander liegen oder parallel zueinander verlaufen. Der Winkel beträgt beispielsweise mindestens 0,5°, mindestens 1° oder mindestens 1,5°. Höchstens ist jedoch ein Winkel von 4° vorgesehen. Beispielsweise beträgt der Winkel höchstens 3°, höchstens 2,0°, höchstens 1,5°, höchstens 1,0° oder höchsten 0,5°. Bevorzugt sind hierbei die kleineren Winkel von höchstens 2,0° und weniger.

Das beschriebene Vorgehen bei dem Herstellen der Kraftwagenfelge ermöglicht eine einfache, schnelle und kostengünstige Ausbildung der Kraftwagenfelge, welche gleichzeitig eine äußerst filigrane Struktur aufweist. Die schnelle Herstellung wird durch das Vakuumdruckgießen erzielt, bei welchem eine deutlich schnellere Füllung der Gießform erfolgt als bei einem Kokillengießen oder Niederdruckgießen, welches normalerweise zum Herstellen von Kraftwagenfelgen verwendet wird. Insgesamt lässt sich durch das Vakuumdruckgie-ßen also die Taktung bei dem Herstellen der Kraftwagenfelge deutlich erhöhen, sodass in derselben Zeitspanne eine größere Anzahl an Kraftwagenfelgen herstellbar ist. Auch die Erstarrungszeit ist für das Druckgießen deutlich kürzer als für das Kokillengießen.

Eine Weiterbildung der Erfindung sieht vor, dass die Felgenmitte mit mehreren in Umfangsrichtung bezüglich der Längsmittelachse der Kraftwagenfelge voneinander beabstandeten Speichen ausgebildet ist. Eine solche Ausgestaltung der Felgenmitte wird insbesondere zur Gewichtsreduzierung der Kraftwagenfelge angewandt, jedoch auch zur Erzielung einer besseren Dämpfung. Die Felgenmitte ist insoweit nicht massiv und in Umfangsrichtung durchgehend ausgestaltet, sondern setzt sich aus den mehreren Speichen zusammen, die in Umfangsrichtung voneinander beabstandet angeordnet sind. Vorzugsweise erstreckt sich jede der mehreren Speichen von der Nabe in radialer Richtung bis hin zu dem Felgenbett, verbindet also die Nabe und das Felgenbett miteinander. Beispielsweise sind wenigstens drei Speichen, wenigstens vier Speichen, wenigstens fünf Speichen oder wenigstens sechs Speichen vorgesehen. Beispielsweise sind mindestens 10, mindestens 14 oder mindestens 18 Speichen realisiert. Vorzugsweise liegen höchstens 30 Speichen oder höchstens 20 Speichen vor. Beispielsweise erstreckt sich jede der Speichen in Umfangsrichtung über höchstens 30° oder weniger, bevorzugt höchstens 15° oder höchstens 10°.

Es kann vorgesehen sein, dass die Speichen eine konstante Erstreckung in Umfangsrichtung aufweisen, also ausgehend von dem Felgenbett bis hin zu der Nabe. Es kann jedoch auch eine Verästelung wenigstens einer der Speichen oder mehrerer oder jeder der Speichen vorgesehen sein, sodass sich also die jeweilige Speiche in mehrere Teilspeichen aufteilt. Beispielsweise erstreckt sich die Speiche zunächst ausgehend von der Nabe in radialer Richtung nach außen und teilt sich an einer Teilungsstelle in mehrere Teilspeichen auf, welche voneinander fortlaufen, insbesondere in Umfangsrichtung. Nach der Teilungsstelle verlaufen die Teilspeichen also voneinander beabstandet bis hin zu dem Felgenbett und greifen beabstandet voneinander an diesem an. Es kann vorgesehen sein, dass eine Längsmittelachse zumindest einer der Speichen, insbesondere die Längsmittelachsen mehrerer oder aller Speichen, die Längsmittelachse der Kraftwagenfelge schneiden oder sogar senkrecht auf ihr stehen. Hierdurch wird eine besonders optimale Krafteinleitung aus der Felgenmitte beziehungsweise von den Speichen in die Nabe erzielt.

Eine Weiterbildung der Erfindung sieht vor, dass die Kraftwagenfelge bereichsweise mit einer ersten Wandstärke von mehr als 15 mm, insbesondere mindestens 17,5 mm oder mindestens 20 mm, und bereichsweise mit einer der geringen Wandstärke entsprechenden zweiten Wandstärke hergestellt ist. Beispielsweise ist vorgesehen, dass die Kraftwagenfelge bereichsweise mit einer ersten Wandstärke von mehr als 5 mm, insbesondere mindestens 7,5 mm oder mindestens 10 mm, jedoch höchstens 20 mm, und bereichsweise mit einer der geringen Wandstärke entsprechenden zweiten Wandstärke hergestellt ist. Die zweite Wandstärke beträgt mindestens 1,5 mm oder mindestens 2 mm und höchstens 15 mm, höchstens 10 mm, höchstens 7,5 mm oder höchstens 5 mm, vorzugsweise höchstens 3 mm, höchstens 2,5 mm oder höchstens 2 mm. Die Kraftwagenfelge weist also nicht vollständig durchgehend die geringe Wandstärke auf, sondern setzt sich aus mehreren Teilen zusammen, von welchen einige die erste Wandstärke und andere die zweite Wandstärke aufweisen. Hierbei ist die erste Wandstärke ganz allgemein größer als die zweite Wandstärke, beispielsweise um einen Faktor von mindestens 1,5, mindestens 2,0 oder mindestens 2,5. Beispielsweise sind die erste Wandstärke und die zweite Wandstärke beide in der Felgenmitte umgesetzt.

So kann insbesondere jede der Speichen - sofern vorhanden - teilweise die erste Wandstärke und teilweise die zweite Wandstärke aufweisen. Hierdurch wird eine besonders hohe Tragfähigkeit der Kraftwagenfelge bei gleichzeitig äußerst filigraner Gestaltung erzielt.

Eine Weiterbildung der Erfindung sieht vor, dass die geringe Wandstärke in einem in Umfangsrichtung zwischen zwei Speichen liegenden Bereich verwendet ist, sodass die beiden Speichen über ein mittels des Vakuumdruckgie-ßens hergestelltes Zwischenspeicherelement miteinander verbunden sind, dass zumindest bereichsweise, insbesondere durchgehend, die geringe Wandstärke aufweist. Der in Umfangsrichtung zwischen den zwei Speichen liegende Bereich kann auch als Zwischenspeichenbereich bezeichnet werden. Der Zwischenspeichenbereich erstreckt sich in Umfangsrichtung zwischen den beiden Speichen und wird in radialer Richtung nach innen von der Nabe und in radialer Richtung nach außen von dem Felgenbett begrenzt. Insoweit liegt der Zwischenspeichenbereich randgeschlossen an der Kraftwagenfelge vor.

Der Zwischenspeichenbereich ist nun zumindest teilweise oder sogar vollständig mit dem Zwischenspeichenelement versehen, sodass der Bereich zwischen den beiden Speichen zumindest teilweise oder sogar vollständig mit dem Zwischenspeichenelement verschlossen ist. Dabei weist das Zwischenspeichenelement die geringe Wandstärke auf. Die beiden Speichen hingegen können eine größere Wandstärke als die geringe Wandstärke aufweisen, beispielsweise eine der ersten Wandstärke entsprechende Wandstärke. Selbstverständlich kann es jedoch auch vorgesehen sein, dass die beiden Speichen mit der geringen Wandstärke ausgestaltet sind. In diesem Fall wird für das Zwischenspeichenelement ebenfalls die geringe Wandstärke verwendet, insbesondere durchgehend, oder eine Wandstärke, die kleiner ist als die geringe Wandstärke. Mithilfe des Zwischenspeichenelements werden für die Kraftwagenfelge hervorragende aerodynamische Eigenschaften erzielt.

Eine Weiterbildung der Erfindung sieht vor, dass das Zwischenspeichenelement einen Bereich vollständig ausfüllend ausgebildet wird, der in Umfangsrichtung von den beiden Speichen, in radialer Richtung nach innen von der Nabe und in radialer Richtung nach außen von dem Felgenbett begrenzt ist. Auf eine derartige Ausgestaltung wurde vorstehend bereits hingewiesen. Das Zwischenspeichenelement füllt also den Zwischenspeichenbereich vollständig aus beziehungsweise verschließt ihn durchgehend. Hierdurch werden besonders gute aerodynamische Eigenschaften realisiert.

Eine Weiterbildung der Erfindung sieht vor, dass das Zwischenspeichenelement in radialer Richtung mit einer Tragfähigkeit hergestellt wird, die mindestens 50 %, mindestens 60 %, mindestens 70 % oder mindestens 75 % der Tragfähigkeit einer der Speichen entspricht. Unter der Tragfähigkeit ist die Belastbarkeit in radialer Richtung zwischen der Nabe und dem Felgenbett zu verstehen. Das Zwischenspeichenelement erstreckt sich insoweit in radialer Richtung ausgehend von der Nabe bis hin zu dem Felgenbett. Die Tragfähigkeit des Zwischenspeichenelements soll kleiner sein als die Tragfähigkeit einer der Speichen, insbesondere als jeder der beiden Speichen. Mindestens entspricht die Tragfähigkeit jedoch einem der genannten Werte.

Eine Weiterbildung der Erfindung sieht vor, dass das Zwischenspeichenelement in radialer Richtung mit einer Tragfähigkeit hergestellt wird, der höchstens 50 %, höchstens 40 %, höchstens 30 % oder höchstens 25 % der Tragfähigkeit einer der Speichen spricht. Auch hierauf wurde vorstehend bereits hingewiesen. Auf die entsprechenden Ausführungen wird Bezug genommen.

Eine Weiterbildung der Erfindung sieht vor, dass das Felgenbett mittels des Vakuumdruckgießens mit der geringen Wandstärke und/oder auf seiner in radialer Richtung innenliegenden Seite mit der Entformungsfläche hergestellt ist. Aufgrund der besonders guten mittels des Vakuumdruckgießens erzielbaren Materialeigenschaften kann das Felgenbett die geringe Wandstärke aufweisen, nämlich zumindest teilweise, also entweder nur teilweise oder durchgehend. Zusätzlich oder alternativ ist an dem Felgenbett die Entformungsfläche ausgebildet, nämlich auf der in radialer Richtung innenliegenden Seite des Felgenbetts. Auf dieser Seite greift die Felgenmitte an dem Felgenbett an beziehungsweise gehen die Speichen in das Felgenbett über. Die Entformungsfläche liegt also beispielsweise in Umfangsrichtung und/oder in axialer Richtung benachbart zu einer der Speichen vor, insbesondere in Umfangsrichtung zwischen zwei der Speichen. Die beschriebene Ausgestaltung ermöglicht eine besonders gewichtssparende und filigrane Kraftwagenfelge.

Eine Weiterbildung der Erfindung sieht vor, dass das Felgenbett mittels des Vakuumdruckgießens mit einer Wandstärke ausgebildet wird, die höchstens dreimal so groß ist wie seine endgültige Wandstärke. Insbesondere wird das Felgenbett mittels des Vakuumdruckgießens mit seiner endgültigen Breite, also seiner endgültigen Erstreckung in axialer Richtung, hergestellt. Es erfolgt vorzugsweise kein Umformen, insbesondere kein Flow-Forming, des Felgenbetts nach dem Vakuumdruckgießen. Es kann jedoch vorgesehen sein, dass das Felgenbett nach dem Vakuumdruckgießen spanend bearbeitet wird, um eine für die Kraftwagenfelge notwendige Oberflächengüte des Felgenbetts sicherzustellen. Hierbei kann eine Verringerung der Wandstärke auftreten.

Zumindest wird also das Felgenbett mittels des Vakuumdruckgießens mit einer Wandstärke ausgebildet, die höchstens dreimal oder höchstens doppelt so groß ist wie die endgültige Wandstärke der Kraftwagenfelge. Beispielsweise erfolgt zum Erzielen der endgültigen Wandstärke ein einseitiges oder ein zweiseitiges spanabtragendes Bearbeiten. Es kann jedoch auch vorgesehen sein, dass die mittels des Vakuumdruckgießens realisierte Wandstärke höchstens 50 %, höchstens 25 %, höchstens 15% oder höchstens 10 % größer ist als die endgültige Wandstärke der Kraftwagenfelge bei ihrem Einsatz als Bestandteil des Rads des Kraftfahrzeugs. Das Felgenbett wird bei dem Vakuumdruckgießen somit mit wesentlich verringerter Nachbearbeitung oder sogar nachbearbeitungsfrei oder zumindest nahezu nachbearbeitungsfrei hergestellt. In jedem Fall entfällt das bislang notwendige Umformen des Felgenbetts, sodass eine äußerst kostengünstige Herstellung der Kraftwagenfelge realisiert wird.

Eine Weiterbildung der Erfindung sieht vor, dass eine mittels des Vakuumdruckgießens hergstellte Ringnut in der Kraftwagenfelge und/oder ein mittels des Vakuumdruckgießens hergestellter Hump in dem Felgenbett ausgebildet ist. Unter der Ringnut ist eine eine ringförmige Gestalt aufweisende Ausnehmung zu verstehen, die in der Kraftwagenfelge nach dem Vakuumdruckgießen vorliegt. Die Ringnut kann in Umfangsrichtung durchgehend ausgebildet sein oder sich aus mehreren in Umfangsrichtung voneinander beabstandeten Ringnutsegmenten zusammensetzen. Jedes der Ringnutsegmente kann hierbei grundsätzlich eine beliebige Form aufweisen, solang die Ringnutsegmente insgesamt ringförmig beziehungsweise kreisförmig an der Kraftwagenfelge vorliegen.

Die Ringnut ist an der Kraftwagenfelge in radialer Richtung, beispielsweise in radialer Richtung nach außen oder nach innen, oder in axialer Richtung geöffnet. Eine in Umfangsrichtung durchgehende und in radialer Richtung nach au-ßen geöffnete Ringnut dient beispielsweise der Aufnahme eines Reifenrands eines Reifens des Rads des Kraftfahrzeugs. In diesem Fall wird die Ringnut in axialer Richtung vorzugsweise von dem Hump begrenzt. Sowohl die Ringnut als auch der Hump werden mittels des Vakuumdruckgießens hergestellt, also nicht nachträglich an beziehungsweise in dem Felgenbett ausgebildet. Insbesondere werden sie nicht durch zerspanendes Bearbeiten des Felgenbetts hergestellt.

Zusätzlich oder alternativ kann es vorgesehen sein, dass die Ringnut auf einer des Außenhorns abgewandten Seite des Innenhorns ausgebildet wird. In diesem Fall ist die Ringnut in axialer Richtung geöffnet, nämlich in die von dem Außenhorn abgewandte Richtung. Durch die Ringnut wird eine Verringerung der Wandstärke des Innenhorns erzielt, sodass das Innenhorn, insbesondere im Bereich der Ringnut, vorzugsweise die geringere Wandstärke aufweist. Die Ringnut dient in diesem Fall einer Materialeinsparung beziehungsweise einer Gewichtsreduzierung der Kraftwagenfelge. Die Ringnut kann in jedem Fall in Umfangsrichtung durchgehend ausgebildet sein. Alternativ ist jedoch - wie bereits erläutert - eine aus mehreren in Umfangsrichtung voneinander beabstandeten Ringnutsegmenten zusammengesetzte Ringnut realisierbar. Die Ringnutsegmente liegen hierbei in Form von grundsätzlich beliebig ausgestalteten Vertiefung vor.

Eine Weiterbildung der Erfindung sieht vor, dass die Kraftwagenfelge aus AlSi10MnMgZn hergestellt ist. Diese Aluminiumlegierung dient insoweit als Gießmaterial. Die Aluminiumlegierung weist hervorragende Festigkeitseigenschaften für die Kraftwagenfelge auf. Beispielsweise kommt als Gießmaterial eine AlSi-Legierung zum Einsatz, die folgende Bestandteile enthält: 6,5 Gew.-% bis 12,0 Gew.-% Si, maximal 0,8 Gew.-% Mn, 0,25 Gew.-% bis 0,6 Gew.-% Mg, 0,08 Gew.-% bis 0,5 Gew.-% Zn, maximal 0,3 Gew.-% Zr, maximal 0,025 Gew.-% Sr, maximal 0,5 Gew.-% Verunreinigungen und als Rest Al. Die Legierung kann wenigstens einen der folgenden optionalen Regierungsbestandteile aufweisen: maximal 0,2 Gew.-% V, maximal 0,2 Gew.-% Mo, maximal 0,3 Gew.-% Sn, maximal 0,3 Gew.-% Co und maximal 0,2 Gew.-% Ti.

Eine solche Legierung ist im besonderen Maße für die Herstellung der Kraftwagenfelge geeignet, weil sie die Realisierung besonders filigraner Strukturen ermöglicht. Vorzugsweise ist der Anteil von Mn größer als 0 Gew.-%, beispielsweise beträgt er 0,2 Gew.-% oder 0,3 Gew.-% einerseits bis 0,8 Gew.-% andererseits. Der Anteil an Mg ist beispielsweise höchstens 0,5 Gew.-%. Bevorzugt beträgt der Anteil an Zn höchstens 0,35 Gew.-%. Weiter bevorzugt ist der Anteil an Sr größer als 0 Gew.-%, insbesondere beträgt er 0,006 Gew.-% bis 0,025 Gew.-%. Besonders bevorzugt enthält die Aluminiumlegierung Cr, nämlich maximal 0,3 Gew.-%. Unter den Verunreinigungen ist wenigstens ein Element des Periodensystems zu verstehen, das sich ohne gezielte Zugabe in der Legierung befindet. Die Verunreinigungen können selbstverständlich auch mehrere dieser Elemente enthalten.

Eine Weiterbildung der Erfindung sieht vor, dass die Kraftwagenfelge nach dem Vakuumdruckgießen wärmebehandelt ist. Das Wärmebehandeln ist beispielsweise ein Glühen der Kraftwagenfelge. Das Glühen umfasst zumindest ein Anwärmen der Kraftwagenfelge auf eine bestimmte Temperatur, welche auch als Halttemperatur bezeichnet werden kann, ein Halten der Kraftwagenfelge auf der Haltetemperatur und ein nachfolgendes Abkühlen von der Haltetemperatur, insbesondere bis auf eine Temperatur von höchstens 200°C oder bis auf eine Umgebungstemperatur.

Es kann vorgesehen sein, dass das Wärmebehandeln für die gesamte Kraftwagenfelge vorgenommen wird. Es kann jedoch auch lediglich lokal begrenzt durchgeführt werden, sodass lediglich lokalbegrenzt Wärme in die Kraftwagenfelge eingetragen wird und entsprechend an der wärmebehandelten Stelle eine höhere Temperatur auftritt als an anderen Stellen der Kraftwagenfelge, an welchen das Wärmebehandeln nicht erfolgt.

Zusätzlich oder alternativ kann das Wärmebehandeln lokal verschieden erfolgen. Hierunter ist zu verstehen, dass ein erster Bereich der Kraftwagenfelge einer ersten Wärmebehandlung und ein zweiter Bereich der Kraftwagenfelge mit einer von der ersten Wärmebehandlung verschiedenen zweiten Wärmebehandlung behandelt wird, wobei im Rahmen der ersten Wärmebehandlung beispielsweise eine erste Haltetemperatur und im Rahmen der zweiten Wärmebehandlung eine zweite Haltetemperatur verwendet wird, welche von der ersten Haltetemperatur verschieden ist.

Es kann vorgesehen sein, dass das Wärmebehandeln bei einer globalen ersten Temperatur erfolgt und die Kraftwagenfelge nur bereichsweise mit einer höheren zweiten Temperatur beaufschlagt wird. In anderen Worten erfolgt das Wärmebehandeln lokal verschieden, nämlich grundsätzlich mit der ersten Temperatur und lediglich lokal begrenzt mit der zweiten Temperatur. Die zweite Temperatur wird hierbei beispielsweise für Bereiche der Kraftwagenfelge verwendet, in welchen sie eine Wandstärke aufweist, die größer ist als die geringe Wandstärke. Die erste Temperatur kann hingegen derart gewählt sein, dass ein optimales Aushärten derjenigen Bereiche erfolgt, in welchen die Kraftwagenfelge die geringe Wandstärke aufweist. Hierdurch werden besonders gute Materialeigenschaften der Kraftwagenfelge erzielt.

Es kann vorgesehen sein, dass das Beaufschlagen mit der höheren zweiten Temperatur durch Bestrahlen mit elektromagnetischer Strahlung insbesondere durch Infrarotlichtbestrahlen, oder durch induktives oder konvektives Erwärmen erfolgt. In jedem Fall soll die höhere zweite Temperatur lediglich lokal an der Kraftwagenfelge vorliegen, sodass das Bestrahlen mit der elektromagnetischen Strahlung beziehungsweise das konduktive oder konvektive Erwärmen lediglich lokal durchgeführt wird.

Es kann vorgesehen sein, dass die bei dem Vakuumdruckgießen verwendete Gießform Bestandteil eines Druckgießwerkzeugs, insbesondere eines Zweiplattendruckgießwerkzeugs oder eines Dreiplattendruckgießwerkzeugs, ist und das Gießmaterial durch wenigstens eine Einspritzöffnung, insbesondere durch mehrere Einspritzöffnungen, in die Gießform eingebracht wird. Das Dreiplattendruckgießwerkzeug zeichnet sich dadurch aus, dass sein Angusssystem in einer anderen Ebene vorliegt als die Einspritzöffnung. Das Dreiplattendruckgießwerkzeug weist drei Platten auf, nämlich eine erste Platte, eine zweite Platte und eine dritte Platte. Zwischen der ersten Platte und der zweiten Platte liegt bevorzugt wenigstens ein Angusskanal vor, über welchen die Einspritzöffnung mit einer Einlassöffnung strömungstechnisch verbunden ist.

Durch die Einlassöffnung wird der Gießform das Gießmaterial zugeführt. Zwischen der zweiten Platte und der dritten Platte wird hingegen die Kraftwagenfelge ausgebildet. Das bedeutet, dass die zweite Platte und die dritte Platte die eigentliche Gießform bilden. Der wenigstens eine Angusskanal und die herzustellende Kraftwagenfelge liegen auf gegenüberliegenden Seiten der zweiten Platte vor. Bevorzugt wird das Gießmaterial durch mehrere Einspritzöffnungen in die Gießform eingebracht. Die mehreren Einspritzöffnungen sind vorzugsweise über den Angusskanal oder über mehrere Angusskanäle jeweils mit der Einlassöffnung strömungstechnisch verbunden. Die Verwendung des Zweiplattendruckgießwerkzeugs oder des Dreiplattendruckgießwerkzeugs ermöglicht eine besonders einfache und rasche Herstellung der Kraftwagenfelge.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Längsschnittdarstellung durch eine Kraftwagenfelge entlang einer Längsmittelachse der Kraftwagenfelge,
- Figur 2: eine Schnittdarstellung einer Speiche einer Felgenmitte der Kraftwagenfelge in einer ersten Ausführungsform, sowie
- Figur 3: eine schematische Schnittdarstellung der Speiche in einer zweiten Ausführungsform.

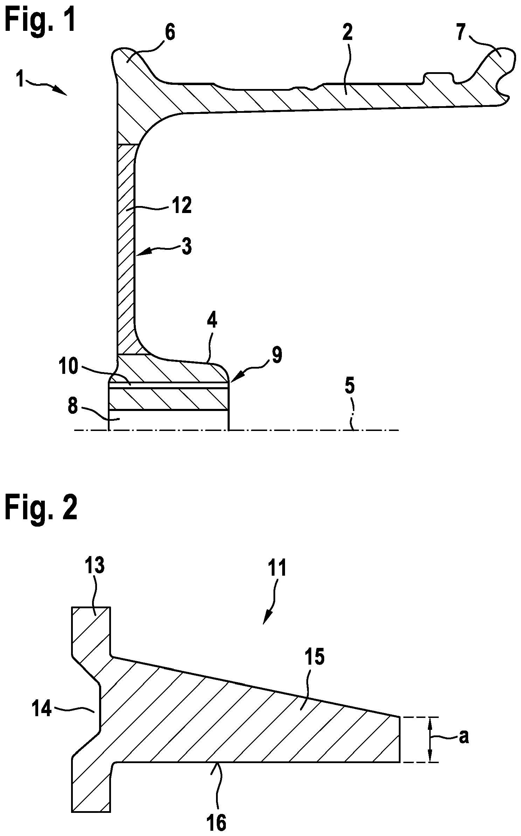

Die Figur 1 zeigt eine schematische Längsschnittdarstellung durch eine Kraftwagenfelge 1 für ein Rad eines Kraftfahrzeugs. Die Kraftwagenfelge 1 weist als wesentliche Bestandteile ein Felgenbett 2, eine Felgenmitte 3 und eine Nabe 4 auf. Gezeigt ist die Kraftwagenfelge 1 im Längsschnitt bezüglich einer Längsmittelachse 5 der Kraftwagenfelge 1. Das Felgenbett 2 ist in axialer Richtung einerseits von einem Außenhorn 6 und andererseits von einem Innenhorn 7 begrenzt, die sich ausgehend von dem Felgenbett 2 in radialer Richtung bezüglich der Längsmittelachse 5 nach außen erstrecken. Ergänzend sei angemerkt, dass sich die axiale Erstreckung des Felgenbetts 2 bis zu einem jeweiligen außenseitigen Ende des Außenhorns 6 beziehungsweise des Innenhorns 7 erstreckt. Die axiale Erstreckung des Felgenbetts 2 schließt also die axialen Erstreckungen des Außenhorns 6 und des Innenhorns 7 mit ein.

Das Felgenbett 2 und die Nabe 4 sind über die Felgenmitte 3 miteinander verbunden. Die Felgenmitte 3 greift also sowohl an dem Felgenbett 2 als auch der Nabe 4 an und erstreckt sich ausgehend von der Nabe 4 bis hin zu dem Felgenbett 2. Die Nabe 4 weist eine Mittenausnehmung 8 auf, die bezüglich der Längsmittelachse 5 zentral in der Nabe 4 vorliegt und diese in axialer Richtung vollständig durchgreift. Zusätzlich weist die Nabe 4 einen Lochkreis 9 mit mehreren Bohrungen 10 auf, welche jeweils zur Aufnahme eines Befestigungsmittels dienen, mittels welchem die Kraftwagenfelge 1 an einer Radnabe des Kraftfahrzeugs befestigbar ist beziehungsweise befestigt wird.

In dem hier dargestellten Ausführungsbeispiel weist die Felgenmitte 3 mehrere Speichen 11 (nicht dargestellt) auf, welche in Umfangsrichtung voneinander beabstandet angeordnet sind. Jede der Speichen 11 erstreckt sich ausgehend von der Nabe 4 bis hin zu dem Felgenbett 2. In Umfangsrichtung zwischen den Speichen 11 liegt ein Zwischenspeichenbereich vor, welcher in Umfangsrichtung von den Speichen 11, in radialer Richtung nach innen von der Nabe 4 und in radialer Richtung nach außen von dem Felgenbett 2 begrenzt ist.

In diesem Zwischenspeichenbereich ist in der dargestellten Ausführungsform ein Zwischenspeichenelement 12 ausgebildet, welches den Zwischenspeichenbereich beispielsweise vollständig ausfüllt. Zumindest das Zwischenspeichenelement 12 weist eine geringe Wandstärke von höchstens 15 mm, höchstens 10 mm, höchstens 7,5 mm oder höchstens 5 mm auf. Um diese zu realisieren, wird die Kraftwagenfelge 1 einstückig und durchgehend in einer Gießform durch Vakuumdruckgießen eines Gießmaterials hergestellt. Als Gießmaterial kommt Aluminium oder eine Aluminiumlegierung zum Einsatz.

Die Figur 2 zeigt eine der Speichen 11 in einer schematischen Querschnittdarstellung entlang einer Längsmittelachse der Speiche 11. Die Längsmittelachse erstreckt sich hierbei von dem Felgenbett 2 bis hin zu der Nabe 4. Bevorzugt schneidet sie die Längsmittelachse 5 der Kraftwagenfelge 1, insbesondere steht sie senkrecht auf ihr. Die Speiche 11 besteht im Querschnitt gesehen aus einer im Wesentlichen rechteckigen Frontblende 13, in welcher einerseits eine Radialnut 14 eingeprägt ist. Andererseits geht von der Frontblende 13 ein Stützelement 15 aus, welches sich - wiederum im Querschnitt gesehen - ausgehend von der Frontblende 13 verjüngt. Die Frontblende 13 liegt in axialer Richtung bezüglich der Längsmittelachse 5 gesehen auf der dem Innenhorn 7 zugewandten Seite des Stützelements 15. Das Stützelement 15 ist insoweit umgekehrt auf der dem Außenhorn 6 zugewandten Seite der Fronblende 13 angeordnet.

Die Radialnut 14 ist bevorzugt in radialer Richtung durchgehend ausgebildet, erstreckt sich also von der Nabe 4 bis hin zu dem Felgenbett 2. Die Radialnut 14 kann jedoch auch unterbrochen ausgestaltet sein. Die Radialnut 14 ist auf einer Innenseite der Kraftwagenfelge 1 ausgebildet, ist nach einer Montage der Kraftwagenfelge 1 an dem Kraftfahrzeug also nicht ohne weiteres sichtbar. Das Stützelement 15 weist auf seiner der Frontblende 13 abgewandten Seite eine Wandstärke a auf, welche der geringen Wandstärke entspricht. Die Wandstärke a beträgt also höchstens 15 mm, ist bevorzugt jedoch kleiner als 15 mm. An dem Stützelement 15 ist eine Entformungsfläche 16 ausgebildet, welche vollständig in einer gedachten Ebene liegt. In dem gezeigten Ausführungsbeispiel erstreckt sich die Entformungsfläche 16 in axialer Richtung von der Frontblende 13 bis hin zu dem der Frontblende 13 abgewandten Ende des Stützelements 15.

Die Entformungsfläche 16 weist eine Erstreckung sowohl in axialer Richtung als auch in radialer Richtung auf, nicht jedoch notwendigerweise in Umfangsrichtung, jeweils bezüglich der Längsmittelachse 5 der Kraftwagenfelge 1. Die gedachte Ebene, in welcher die Entformungsfläche 16 liegt, schließt mit der Längsmittelachse 5 der Kraftwagenfelge 1 oder einer zu dieser parallelen Achse einen Winkel von mehr als 0° und höchstens 4° ein. In dem hier dargestellten Ausführungsbeispiel verläuft die Entformungsfläche 16 unter einem Winkel von 1,5° zu der Längsmittelachse 5, sodass ein Entformen der Entformungsfläche 16 nahezu parallel zu ihr erfolgt.

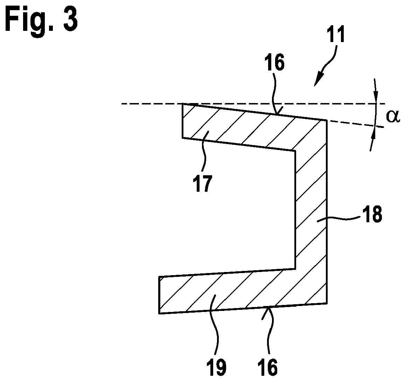

Die Figur 3 zeigt die Speiche 11 in einer zweiten Ausführungsform, welche anstelle der ersten Ausführungsform für die Kraftwagenfelge 1 Verwendung finden kann. In der zweiten Ausgestaltung besteht die Speiche 11 aus drei Stegen 17, 18 und 19, welche im Wesentlichen U-förmig zueinander angeordnet sind. Das bedeutet, dass die Stege 17 und 19 lediglich über den Steg 18 miteinander verbunden sind, welcher jeweils endseitig an den Stegen 17 und 19 angreift. Die Stege 17 und 19 erstrecken sich ausgehend von dem Steg 18 in dieselbe axiale Richtung. Sowohl an dem Steg 17 als auch an dem Steg 19 liegt jeweils eine Entformungsfläche 16 vor. Die Entformungsflächen 16 beziehungsweise die sie vollständig aufnehmenden Ebenen schließen jeweils mit der Längsmittelachse einen Winkel α ein, wobei α wiederum größer als 0° ist und höchstens 4° beträgt. In dem hier dargestellten Ausführungsbeispiel ist der Winkel α größer als 0°, beispielsweise beträgt er ungefähr oder genau 3°.

Die beschriebene Ausgestaltung der Kraftwagenfelge 1 realisiert eine äußerst filigrane Optik und stellt gleichzeitig aufgrund des Herstellens der Kraftwagenfelge 1 durch das Vakuumdruckgießen eine kostengünstige und schnelle Herstellung der Kraftwagenfelge 1 sicher. Zudem werden mittels des Vakuumdruckgießens des Aluminiums oder der Aluminiumlegierung hervorragende Festigkeitswerte erzielt.

### BEZUGSZEICHENLISTE:

- 1: Kraftwagenfelge
- 2: Felgenbett
- 3: Felgenmitte
- 4: Nabe
- 5: Längsmittelachse
- 6: Außenhorn
- 7: Innenhorn
- 8: Mittenausnehmung
- 9: Lochkreis
- 10: Bohrung
- 11: Speiche
- 12: Zwischenspeichenelement
- 13: Frontblende
- 14: Radialnut
- 15: Stützelement
- 16: Entfernungsfläche
- 17: Steg
- 18: Steg
- 19: Steg

## Patentansprüche

1. Kraftwagenfelge (1) aus Aluminium oder einer Aluminiumlegierung für ein Rad eines Kraftfahrzeugs, wobei die Kraftwagenfelge (1) ein auf gegenüberliegenden Seiten von einem Außenhorn (6) und einem Innenhorn (7) begrenztes Felgenbett (2), eine Nabe (4) mit einer Mittenausnehmung (8) und einem Lochkreis (9) sowie eine das Felgenbett (2) und die Nabe (4) miteinander verbindende, im Längsschnitt außermittig an dem Felgenbett (2) angreifende Felgenmitte (3) aufweist, wobei die Kraftwagenfelge (1) einstückig und durchgehend in einer Gießform durch Vakuumdruckgießen eines Gießmaterials hergestellt ist, **dadurch gekennzeichnet, dass** die Kraftwagenfelge (1)
- wenigstens bereichsweise eine geringe Wandstärke (a) von höchstens 15 mm aufweist, und/oder
- eine Krümmung mit einem geringen Krümmungsradius von höchstens 4 mm aufweist, und/oder
- eine in axialer Richtung und in radialer Richtung und/oder in axialer Richtung und in tangentialer Richtung bezüglich einer Längsmittelachse (5) der Kraftwagenfelge (1) verlaufende Entformungsfläche (16) aufweist, die vollständig in einer gedachten Ebene liegt, wobei die Ebene mit der Längsmittelachse (5) einen Winkel (α) einschließt, der mindestens 0° und höchstens 4° beträgt.

2. Kraftwagenfelge (1) nach Anspruch 1, **dadurch gekennzeichnet, dass** die Felgenmitte (3) mit mehreren in Umfangsrichtung bezüglich der Längsmittelachse (5) der Kraftwagenfelge (1) voneinander beabstandeten Speichen (11) ausgebildet ist.

3. Kraftwagenfelge (1) nach einem der vorhergehenden Ansprüche, **dadurch gekennzeichnet, dass** die Kraftwagenfelge (1) bereichsweise mit einer ersten Wandstärke von mehr als 15 mm und bereichsweise mit einer der geringen Wandstärke (a) entsprechenden zweiten Wandstärke hergestellt ist.

4. Kraftwagenfelge (1) nach einem der vorhergehenden Ansprüche, **dadurch gekennzeichnet, dass** die geringe Wandstärke (a) in einem in Umfangsrichtung zwischen zwei Speichen (11) liegenden Bereich verwendet ist, sodass die beiden Speichen (11) über ein mittels des Vakuumdruckgießens hergestelltes Zwischenspeichenelement (12) miteinander verbunden sind, das zumindest bereichsweise die geringe Wandstärke (a) aufweist.

5. Kraftwagenfelge (1) nach einem der vorhergehenden Ansprüche, **dadurch gekennzeichnet, dass** das Felgenbett (2) mittels des Vakuumdruckgießens mit der geringen Wandstärke (a) und/oder auf seiner in radialer Richtung innenliegenden Seite mit der Entformungsfläche (16) hergestellt ist.

6. Kraftwagenfelge (1) nach einem der vorhergehenden Ansprüche, **dadurch gekennzeichnet, dass** eine mittels des Vakuumdruckgießens hergestellte Ringnut in der Kraftwagenfelge (1) und/oder ein mittels des Vakuumdruckgießens hergestellter Hump in dem Felgenbett (2) ausgebildet ist.

7. Kraftwagenfelge (1) nach einem der vorhergehenden Ansprüche, **dadurch gekennzeichnet, dass** die Kraftwagenfeig aus AlSi10MnMgZn hergestellt ist.

8. Kraftwagenfelge (1) nach einem der vorhergehenden Ansprüche, **dadurch gekennzeichnet, dass** die Kraftwagenfelge (1) nach dem Vakuumdruckgießen wärmebehandelt ist.

## Claims

1. Wheel rim for a vehicle wheel (1) made of aluminum or an aluminum alloy for a wheel of a motor vehicle, wherein the wheel rim for a vehicle wheel (1) has a rim base (2) delimited on opposite sides by an outer flange (6) and an inner flange (7), a hub (4) having a central cutout (8) and a hole circle (9), as well as a rim center (3) connecting the rim base (2) and the hub (4) with one another and engaging eccentrically with the rim base (2), wherein the wheel rim for a vehicle wheel (1) is manufactured in one piece and continuously in a casting mold by means of vacuum die casting a pouring material, **characterised** inthat the wheel rim for a vehicle wheel (1)
- has at least in some parts a thin wall thickness (a) of maximum 15 mm, and/or
- has a curvature with a low curvature radius of maximum 4 mm, and/or
- has a deformation surface (16) extending in axial direction and in radial direction and/or in axial direction and in tangential direction with regard to a longitudinal central axis (5) of the wheel rim for a vehicle wheel (1), which lies completely in an imaginary plane, wherein the plane subtends with the longitudinal central axis (5) an angle (α) which is at least 0° and maximum 4°.

2. Wheel rim for a vehicle wheel (1) according to claim 1, **characterized in that** the rim center (3) is designed having several spokes (11) spaced from one another in peripheral direction with regard to the longitudinal central axis (5) of the wheel rim for a vehicle wheel (1).

3. Wheel rim for a vehicle wheel (1) according to any of the preceding claims, **characterized in that** the wheel rim for a vehicle wheel (1) is manufactured in some reasons with a first wall thickness of more than 15 mm and in some regions with a second wall thickness corresponding to the lower wall thickness (a).

4. Wheel rim for a vehicle wheel (1) according to any of the preceding claims, **characterized in that** the low wall thickness (a) is used in a region situated in peripheral direction between two spokes (11), such that the two spokes (11) are connected to one another by means of an intermediate spoke element (12) manufactured by means of the vacuum die casting, which intermediate spoke element has at least in some regions the low wall thickness (a).

5. Wheel rim for a vehicle wheel (1) according to any of the preceding claims, **characterized in that** the room base (2) is manufactured by means of the vacuum die casting with the low wall thickness (a) and/or on its side which is inlying in radial direction with the deformation surface

6. Wheel rim for a vehicle wheel (1) according to any of the preceding claims, **characterized in that** an annular groove in the wheel rim for a vehicle wheel (1) manufactured by means of the vacuum die casting and/or a hump manufactured by means of the vacuum die casting is formed in the rim base (2).

7. Wheel rim for a vehicle wheel (1) according to any of the preceding claims, **characterized in that** the wheel rim for a vehicle wheel is manufactured from AISi10MnMgZn.

8. Wheel rim for a vehicle wheel (1) according to any of the preceding claims, **characterized in that** the wheel rim for a vehicle wheel is heat-treated after the vacuum die casting.

## Revendications

1. Jante pour roue de véhicule (1) en aluminium ou en un alliage d'aluminium pour une roue d'un véhicule automobile, dans laquelle la jante pour roue de véhicule (1) présente une embase de jante (2) délimitée sur des côtés opposés par un cornet extérieur (6) et un cornet intérieur (7), un moyeu (4) avec un évidement central (8) et un cercle de perçage (9) ainsi qu'un centre de jante (3) reliant l'embase de jante (2) et le moyeu (4) l'un à l'autre, agissant en coupe longitudinale de manière excentrée sur l'embase de jante (2), dans laquelle la jante pour roue de véhicule (1) est fabriquée d'un seul tenant et en continu dans un moule par coulage sous pression sous vide d'un matériau de coulée, **caractérisée en ce que** la jante pour roue de véhicule (1)
- présente au moins par endroits une épaisseur de paroi faible (a) d'au plus 15 mm, et/ou
- présente une courbure avec un rayon de courbure faible d'au plus 4 mm, et/ou
- présente une surface de déformation (16) s'étendant dans le sens axial et dans le sens radial et/ou dans le sens axial et dans le sens tangentiel par rapport à un axe central longitudinal (5) de la jante pour roue de véhicule (1), surface qui se trouve entièrement dans un plan imaginaire, dans lequel le plan forme avec l'axe central longitudinal (5) un angle (α) qui s'élève au moins à 0° et au plus à 4°.

2. Jante pour roue de véhicule (1) selon la revendication 1,**caractérisée en ce que** le centre de jante (3) est réalisé avec plusieurs rayons (11) espacés les uns des autres dans le sens périphérique par rapport à l'axe central longitudinal (5) de la jante pour roue de véhicule (1).

3. Jante pour roue de véhicule (1) selon l'une quelconque des revendications précédentes, **caractérisée en ce que** la jante pour roue de véhicule (1) est fabriquée par endroits avec une première épaisseur de paroi de plus de 15 mm et par endroits avec une seconde épaisseur de paroi correspondant à l'épaisseur de paroi (a) faible.

4. Jante pour roue de véhicule (1) selon l'une quelconque des revendications précédentes, **caractérisée en ce que** l'épaisseur de paroi (a) faible est utilisée dans une zone se trouvant dans le sens périphérique entre deux rayons (11) de sorte que les deux rayons (11) soient reliés l'un à l'autre par le biais d'un élément de rayon intermédiaire (12) fabriqué par coulage sous pression sous vide qui présente au moins par endroits l'épaisseur de paroi (a) faible.

5. Jante pour roue de véhicule (1) selon l'une quelconque des revendications précédentes, **caractérisée en ce que** l'embase de jante (2) est fabriquée par coulage sous pression sous vide avec l'épaisseur de paroi (a) faible et/ou sur son côté intérieur dans le sens radial avec la surface de déformation (16).

6. Jante pour roue de véhicule (1) selon l'une quelconque des revendications précédentes, **caractérisée en ce qu'**une rainure annulaire fabriquée par coulage sous pression sous vide dans la jante pour roue de véhicule (1) et/ou une bosse fabriquée par coulage sous pression sous vide est formée dans l'embase de jante (2).

7. Jante pour roue de véhicule (1) selon l'une quelconque des revendications précédentes, **caractérisée en ce que** la jante pour roue de véhicule est fabriquée en AlSi10MnMgZn.

8. Jante pour roue de véhicule (1) selon l'une quelconque des revendications précédentes, **caractérisée en ce que** la jante pour roue de véhicule (1) est traitée thermiquement après le coulage sous pression sous vide.
